# EUROPÄISCHE PATENTSCHRIFT

(11) **EP 1 391 249 B1**
(45) Veröffentlichungstag und Bekanntmachung des Hinweises auf die Patenterteilung: **22.04.2015**
(21) Anmeldenummer: 03018154.9
(22) Anmeldetag: 08.08.2003
(51) Int. Cl.: C09D 4/00, B32B 27/00, A47J 36/02, B05D 5/08, C03C 17/00

(54) **Reinigungsfreundliche Vorrichtung**
Apparatus to be easy cleaned
Dispositf d'épuration faclie

(30) Priorität: 09.08.2002 DE 10236728
(43) Veröffentlichungstag der Anmeldung: 25.02.2004
(73) Patentinhaber: Schott AG, 55122 Mainz (DE)
(72) Erfinder: Henze, Inka, Dr., 55288 Udenheim (DE); Klippe, Lutz, Dr., 65187 Wiesbaden (DE); Krause, Cora, Dr., 76835 Burrweiler (DE); Metz, Bernd, 55126 Mainz (DE); Dzick, Jürgen, Dr., 55268 Nieder-Olm (DE); Schultheis, Bernd, 55270 Schwabenheim (DE)
(74) Vertreter: Fritzsche, Thomas

(56) Entgegenhaltungen:
- EP-A- 0 492 545
- EP-A- 0 658 525
- WO-A-99/02463
- WO-A-99/64363
- FR-A- 2 746 810
- US-A- 5 523 162
- PATENT ABSTRACTS OF JAPAN vol. 017, no. 355 (C-1079), 6. Juli 1993 (1993-07-06) & JP 05 051238 A (TOYOTA MOTOR CORP), 2. März 1993 (1993-03-02)

## Beschreibung

Die Erfindung betrifft eine Vorrichtung mit einer leicht reinigbaren, bis mindestens 300°C hitzebeständigen, Oberflächenschicht.

Das Ausrüsten von Gegenständen mit schmutzabweisenden Substanzen ist allgemein bekannt. So ist es beispielsweise auch bekannt, die Oberfläche von Gläsern, Glaskeramiken, Glasuren, Emaille oder auch Steinen mittels Silikonen zu behandeln, um diese schmutz- und wasserabweisend auszurüsten. Ebenso können auch Metall- und Kunststoffflächen schmutz- und wasserabweisend ausgerüstet werden. Dabei wird üblicherweise derart vorgegangen, dass die Oberflächen der zu behandelnden" Gegenstände durch Auftragen einer flüssigen Zusammensetzung hydrophobisiert werden. Hierzu werden üblicherweise eine Vielzahl von Chemikalien, insbesondere jedoch Silikonöle und/oder fluorierte Silane verwendet. Die so behandelten Oberflächen erweisen sich als schwer benetzbar, wodurch das Wasser abperlt. Verschmutzungen haften nur schwach an der behandelten Oberfläche an und lassen sich somit leicht entfernen.

Diese Vorgehensweise hat jedoch zum Nachteil, dass die aufgebrachten Chemikalien nur mit den direkt auf dem Substratmaterial verfügbaren OH-Gruppen reagieren und feste Bindungen eingehen können. Auch eine entsprechende Vorbehandlung, wie beispielsweise Wasserstoff-/Sauerstoffplasma oder geeigneter Haftvermittlersubstanzen, an der Oberfläche von Gegenständen, insbesondere Gläsern, Metallen und Kunststoffen kann nur die Dichte der aufgebrachten Chemikalien erhöhen, nicht jedoch die Dicke, so dass nur monomolekulare hydrophobe Schichten erzeugt werden, welche beim Gebrauch, insbesondere auch bei mechanischer Belastung, wie z.B. beim Reinigen, mit haushaltsüblichen Hilfs- und Reinigungsmitteln schnell abgerieben werden, wodurch die erwünschte Eigenschaft der leichten Reinigbarkeit verloren geht.

Es ist daher bereits versucht worden, die Haltbarkeit derartiger Beschichtungen zu erhöhen. So beschreibt beispielsweise die EP-A-0,658,525 die Herstellung eines wasserabweisenden mehrschichtigen Films. Dabei werden drei unterschiedliche Sollösungen hergestellt, gemischt, auf ein Glassubstrat aufgetragen und ein Gelüberzug auf der Glasoberfläche erzeugt. Durch Erhitzen wird dann eine Metalloxidoberflächenschicht hergestellt. Auf diese Metalloxidschicht wird dann, wie zuvor beschrieben, eine Fluoralkylsilanschicht aufgetragen.

In der JP-A-11 092 175 wird ein Verfahren beschrieben, wonach Methoxysilan oder eine Ethoxysilanverbindung, die eine Fluorkohlenstoffkette enthält, auf der Oberfläche von kleinen Teilchen mit einem Durchmesser von 100 nm fixiert wird. Dann werden die so modifizierten Teilchen in einem wässrigen Medium gelöst und auf eine zu beschichtende Oberfläche aufgetragen, das Lösungsmittel entfernt und der Rückstand anschließend eingebrannt. Auf diese Weise wird eine mit kleinen hydrophobisierten Teilchen beschichtete Oberfläche erhalten.

In der WO 99/64363 wird die Herstellung einer Wasserabweisenden Oberfläche beschrieben, wobei zuerst die Oberfläche des Glases aufgeraut und sämtliche oberflächlich vorliegenden Metallionen entfernt werden. Danach wird ein wasserabweisender Film auf an sich bekannte Weise auf die zuvor behandelte Oberfläche aufgetragen. Durch das Aufrauhen der Oberfläche werden die dadurch erhaltenen Rauhigkeitstäler mit dem Hydrophobierungsmittel aufgefüllt.

In der WO 99/02463 wird die Herstellung einer kratzfesten Beschichtung beschrieben, bei der auf die Oberfläche eine organische Substanz mit silikonartigen Netzwerken aufgetragen wird. Anschließend wird eine Wärmebehandlung durchgeführt, bei der Temperatur und Dauer so gewählt sind, dass die aufgetragene rein organische Schicht weitgehend zersetzt und/oder entfernt wird, sich aber in den obersten Moleküllagen eine Verbindung anorganischer Moleküle des Trägermaterials und organischer Moleküle der aufgebrachten Substanz ausbilden kann. Auf diese Weise wird eine organische Substanz, wie beispielsweise eine Methylgruppe, unter Ausbildung einer Si-C Bindung direkt an das Siliziumatom der Glasoberfläche gebunden.

In der DE 695 02671 T2 (WO9S/24053) ist eine Anzeigevorrichtung mit einem Bildschirm beschrieben, der eine nichtabsorbierende Deckschicht aus einem hybriden anorganischorganischem Material und einem anorganischen Netzwerk aus Silicium- und Metalloxid aufweist. Dabei sind die polymeren Ketten mit dem anorganischen Netzwerk verflochten und bilden ein hybrides anorganisch-organisches Netzwerk. Es hat sich jedoch gezeigt, dass in einer derartigen Schicht organische Komponenten, insbesondere hydrophobe organische Komponenten wie Fluoralkyle sich nicht homogen in eine derartige Schicht einbauen, sondern dass diese im Wesentlichen an der von der Trägerschicht abgewandten Oberfläche anlagern. Aus diesem Grund ist diese äußere hydrophobe Schicht relativ leicht abreibbar.

Die US 5,523,162 A1 beschreibt einen Gegenstand, der auf seiner Oberfläche eine Schicht mit wasser- und schmutzabweisenden Eigenschaften sowie mit guten Gleiteigenschaften aufweist. Dabei wird zuerst ein Silikat-Primer auf die Oberfläche eines Kunststoffsubstrates abgeschieden, woran direkt eine hydrophobe Substanz nämlich eine Perfluoralkyl-Alkylsilan Verbindung kondensiert wird. Durch diese Vorgehensweise, d. h. durch die Ausbildung einer Primerzwischenschicht wird die Haltbarkeit der Silanoberflächenbehandlung gegenüber der Verwitterung verbessert.

Alle mit diesen Verfahren erzeugten hydrophoben sowie ggf. schmutzabweisenden Eigenschaften, erweisen sich beim Gebrauch nicht als ausreichend dauerhaft und gehen insbesondere bei mechanischer Beanspruchung rasch verloren.

Die Erfindung hat somit zum Ziel eine leicht zu pflegende Vorrichtung bzw. einen leicht zu pflegenden Gegenstand bereitzustellen, deren/dessen Oberfläche mit einer pflegeleichten und schmutzabweisenden Ausrüstung versehen ist, die auch unter Beanspruchung abriebfest ist wodurch die zuvor genannten pflegeleichten Eigenschaften der Kücheneinrichtung lange erhalten bleiben. Dabei soll die Oberfläche so ausgestaltet sein, dass sie je nach Bedarf als optisch wahrnehmbarer oder als nicht wahrnehmbarer Überzug ausgestaltet werden kann.

Die Erfindung hat außerdem zum Ziel, eine derartige Ausrüstung für Gebrauchsgegenstände, insbesondere Haushalts- und Küchengegenstände, bereitzustellen, die die optischen Eigenschaften des Elementes nicht oder nicht merkbar verändert.

Dieses Ziel wird erfindungsgemäß für die in den Ansprüchen definierte Vorrichtung bzw. Gegenstand sowie den damit erhaltenen Erzeugnissen erreicht.

Erfindungsgemäß wurde gefunden, dass sich eine gleichförmige, widerstandsfähige Beschichtung bzw. ein Überzug auf einen Gegenstand mit im Querschnitt homogenen Eigenschaften dadurch erreichen lässt, dass dessen Oberfläche mit einer Schicht versehen wird, die ein dünnes Metalloxidnetzwerk bzw. eine Metalloxidmatrix umfasst, wobei in dem Netzwerk eine hydrophobe Substanz gleichmäßig verteilt enthalten ist. Die Schicht ist üblicherweise eine gleichförmige Schicht aus einem zusammenhängenden flächenförmig ausgebreiteten Metalloxidnetzwerk. Die in der erfindungsgemäßen Vorrichtung enthaltenen Metalloxidnetzwerke können offen- oder geschlossenporig sein.

Die Metalloxidschichten werden durch thermische Behandlung einer aufgebrachten Gelschicht ausgebildet und verbleiben als fester Überzug oder Coating auf dem Erzeugnis. Die Eigenschaften dieses Überzugs bzw. Coatings bleiben von der Möglichkeit unberührt, dass vor der Erzeugung dieses Überzugs die zu beschichtende Oberfläche zuvor geeignet aktiviert wird (z.B. Plasmabehandlung, Aufbringen einer geeigneten Haftvermittlerschicht). Ebenso ist es möglich einen Haftvermittler in die Beschichtungslösung einzumischen. In der Oberflächenbeschichtung liegt die hydrophobe Substanz gleichmäßig verteilt vor. Gleichmäßig bedeutet, dass im Unterschied zu den oben ausgeführten Lösungen, wo lediglich an den Grenzflächen eine signifikante Menge der hydrophoben Substanz auftritt, überall in der Schicht eine signifikante Konzentration der hydrophoben Substanz gefunden wird, was mittels einer SIMS-Messung nachweisbar ist. Auf diese Weise behält die Oberflächenschicht auch im Fall eines oberflächlichen Abriebs die erfindungsgemäß gewünschten Eigenschaften bei.

Die zur Herstellung der erfindungsgemäßen Vorrichtung verwendeten Gele sind insbesondere Metalloxidgele, welche mittels einem Sol-Gelprozess herstellbar sind. Dabei werden die Gele in situ während des Auftragens auf den zu beschichtenden Gegenstand bzw. Vorrichtung gebildet, wodurch ein einheitliches kontinuierliches Gelnetzwerk auf der Oberfläche des zu beschichtenden Gegenstandes erzeugt wird. Bevorzugte Metalloxide sind SiO₂, Al₂O₃, Fe₂O₃, In₂O₃, SnO₂, ZrO₂, B₂O₄ und/oder TiO₂. Bevorzugte Gele sind Hydrogele, Alkogele, Xerogele und/oder Aerogele. Die erfindungsgemäße Zugabe der hydrophoben, ggf. auch oleophoben, Substanz zur Solmischung vor bzw. während der Ausbildung des Gels bewirkt, dass die hydrophobe Substanz im gesamten Volumen des sich bildenden Gelnetzwerkes gleichmäßig verteilt enthalten ist und durch Polykondensation beispielsweise ihrer Silanolgruppen chemisch gebunden wird. Auf diese Weise ist es möglich der so behandelten Oberfläche besonders abriebfeste und dauerhafte schmutzabweisende Eigenschaften zu verleihen.

Die allgemeine Herstellung von Gelschichten mittels eines Sol-Gelprozesses ist an sich bekannt und vielfältig beschrieben. Dabei wird üblicherweise derart vorgegangen, dass in einer Lösung, vorzugsweise einer wasserhaltigen und/oder alkoholischen Lösung, mit anorganischen Metallsalzen oder metallorganischen Verbindungen wie Metallalkoxyden durch Hydrolyse eine Polymerreaktion erzeugt wird, wobei eine kolloidale Suspension, d.h. ein Sol, entsteht. Durch weitere Hydrolyse und Kondensation wird aus dem Sol ein zusammenhängendes polymeres Gelnetzwerk gebildet. Vorzugsweise wird die Ausbildung des Gels direkt während des Beschichtens erzeugt. Die endgültige Ausbildung des gesamten Gelnetzwerkes wird dabei vorzugsweise durch Erwärmen beschleunigt. Typische Temperaturen betragen hierfür zwischen 0°C und 400°C, vorzugsweise zwischen 20°C und 400°C, insbesondere 250°C und 380°C, wobei eine Temperatur von 300°C besonders bevorzugt ist. Durch Wahl der Hydrolysebedingungen können möglichst dichte, d.h. mehr oder weniger porenlose bzw. nur winzigste Poren aufweisende Gelnetzwerke erzeugt werden. Metallalkoxyde sind vorzugsweise C₁-C₄-Metallalkoxyde, wobei Metallmethylate und Metallethylate besonders bevorzugt sind. Unter den Metallsalzen sind Metallnitrate bevorzugt. Die Hydrolyse unter Ausbildung des Sols wird üblicherweise mit einem Überschuss an destilliertem Wasser gestartet und durch Stehenlassen über einen längeren Zeitraum, beispielsweise zwei bis vier Tage, wird bei Umgebungstemperatur und ggf. auch bei erhöhter Temperatur das Sol ausgebildet.

Als hydrophobe Substanzen sind generell alle hydrophoben Substanzen geeignet, die sich in das bildende Gel einlagern lassen. Für das erfindungsgemäße Verfahren ist es bevorzugt solche hydrophoben Substanzen zu verwenden, die sich in der Gel-bildenden Sollösung möglichst gleichmäßig verteilen. Die im erfindungsgemäßen Verfahren verwendeten hydrophoben Substanzen sind daher vorzugsweise in geringem Umfang selbst wasserlöslich oder können mittels Solubilisatoren oder durch Hydrolyse wasserlöslich gemacht werden. In einer weiteren bevorzugten Ausführungsform weisen die erfindungsgemäß verwendeten oleophoben Substanzen eine chemische Modifikation auf, welche Wasserlöslichkeit vermittelt. Derartige Modifikationen sind wasserlösliche Gruppen wie z.B. Aminoreste oder Säuregruppen. Beispiele hierfür sind natürliche und synthetische Öle und/oder längerkettige Fettsäuren, insbesondere Fettsäuren mit einer Kette mit mindestens 6 C-Atomen, vorzugsweise mindestens 10 C-Atomen. Besonders bevorzugt sind jedoch hydrophobe oleophobe Substanzen, insbesondere Silikone und Silane, Siloxane, Silikonöle, Silikonfette. Die erfindungsgemäß verwendeten Silikonverbindungen können geradkettig oder verzweigt sein oder ggf. auch zyklische Silangruppen enthalten. In einer bevorzugten Ausführungsform enthalten sie eine wasserlöslichkeitsvermittelnde funktionelle Gruppe, wie z.B. eine Aminogruppe, deren Wasserstoffatome ggf. auch substituiert sein können.

Die erfindungsgemäß verwendeten hydrophoben Substanzen sind vorzugsweise fluorhaltig und weisen insbesondere mindestens 5 %, vorzugsweise mindestens 10 % Fluoratome (bezogen auf die Gesamtzahl der Atome der fertig eingelagerten hydrophoben Substanz nach dem Sintern) auf. Bevorzugt weisen sie jedoch mindestens 20 % Fluoratome auf, wobei mindestens 30 % besonders bevorzugt ist. Obwohl es sich gezeigt hat, dass durch die erfindungsgemäße Einlagerung der hydrophoben Substanzen im in situ Prozess die schmutzabweisende Ausrüstung dauerhaft ist, so ist es doch bevorzugt die hydrophoben Substanzen mittels reaktiven Gruppen, insbesondere mittels reaktiven Silanolgruppen, mit dem Gelnetzwerk chemisch zu verbinden. Hydrophobe Materialien mit Methoxy-, Ethoxy-, Propoxy-, Butoxy- oder Isocyanatgruppen sowie Chlorosilane sind besonders geeignet.

Im erfindungsgemäßen Verfahren bevorzugte Silane weisen die allgemeine Formel

(CFₓH_{y})-(CFₐH_{b})ₙ-(CFₐ, H_{b},)ₘ-Si-(OR)₃

auf, worin x 1, 2 oder 3 ist und x + y = 3 ergibt, a und a 1 oder 2 sind und a + b sowie a' und b' = 2 ergibt und n und m unabhängig voneinander eine ganze Zahl von 0 bis 20 bedeutet und zusammen maximal 30 ergeben und R ein geradkettiger, verzweigter, gesättigter oder ungesättigter (ggf. Heteroatome aufweisender) C₁ - bis C₈-Alkylrest ist. Bevorzugte Alkylreste sind Methyl-, Ethyl- und Propylreste, sowie deren Aminoderviate. Erfindungsgemäß sind Silane bevorzugt, die Heteroatome bzw. Heteroatom umfassende funktionelle Gruppen aufweisen, welche die Wasserlöslichkeit des Silans erhöhen bzw. vermitteln. Die Heteroatome und/ oder funktionellen Gruppen sind in das Rückgrat der Alkylkohlenstoffkette und/oder der Fluoralkylkohlenstoffkette eingebaut und/oder liegen daran als Substituent vor. Erfindungsgemäß besonders bevorzugt sind Aminoalkyl-Gruppen und/ oder Amino-Fluoralkyl-Gruppen.

In einer bevorzugten Ausführungsform ist x = 3 und y = 0, so dass die obige allgemeine Formel eine endständige CF₃-Gruppe aufweist. In einer weiteren bevorzugten erfindungsgemäßen Ausführungsform ist a = 2 und a' = 0, so dass CF₂ und CH₂-Blöcke gebildet werden. Selbstverständlich können auch mehr als 2 Blöcke in der Kette vorhanden sein und die CF₂-Blöcke und CH₂-Blöcke vertauscht sein. Allerdings ist es bevorzugt die fluorierten Blöcke möglichst endständig zum Si-Atom anzuordnen. Bevorzugte Werte für n sind 1 - 10, insbesondere 1 - 8, sowie für m 0 - 10, insbesondere 0 - 8. In der aufzutragenden Gellösung beträgt das Gewichtsverhältnis von hydrophober Substanz zu Gelnetzwerk vorzugsweise 0,01:1 bis 1:1, wobei Verhältnisse zwischen 0,05:1 und 0,2:1 bevorzugt sind.

Das Fluoralkylsilan wird in einer solchen Menge zugesetzt, dass vorzugsweise sein Anteil an der fertigen Matrix mindestens 3 Mol-%, insbesonders mindestens 5 Mol-% und üblicherweise mindestens 7 Mol-% beträgt. Die Höchstmengen betragen vorzugsweise 55 Mol-%, insbesonders 50 Mol-% bzw. 45 Mol-%. In vielen Fällen reicht eine Höchstmenge von 40 Mol-% völlig aus. Es hat sich auch gezeigt, dass durch den Zusatz von Mengen von oberhalb von 3 Mol-% Fluoralkylsilan pro Matrix besonders gute hydrophobe und schmutzabweisende Eigenschaften erhalten werden und insbesondere das Anbacken von Speiseresten in Lebensmitteln etc. beim Erhitzen, wie es beispielsweise in einem Backofen erfolgt, verhindert wird.

Erfindungsgemäß besonders bevorzugt ist es die Silane vorzuhydrolysieren. In einer zweckmäßigen Ausführungsform werden die hydrophoben Fluoralkylsilane, insbesonders langkettige Fluoralkylsilane, vorkondensiert bzw. vorhydrolysiert. Die Vorkondensation erfolgt insbesonders im konzentrierten Zustand bei Temperaturen unterhalb 60°C, insbesonders unterhalb 55°C, wobei Temperaturen unterhalb 50°C bzw. 45°C besonders bevorzugt sind. Die Vorhydrolyse wird erfindungsgemäß mit möglichst wenig Wasser durchgeführt. Allerdings liegt das Wasser bezogen auf die hydrolysierbaren Gruppen im Überschuss vor. Vorzugsweise wird mit weniger als 50 Gew.-% H₂O (bezogen auf das Gesamtgewicht der Lösung der Vorhydrolyse), insbesonders weniger als 45 bzw. 40 Gew.-% vorhydrolysiert. Besonders bevorzugt wird mit Mengen von höchstens 35 und insbesonders höchstens 30 Gew.-% H₂O vorhydrolysiert. Mindesthydrolysemengen betragen 0,1 Gew-% bzw. 0,2 Gew.-%, wobei 0,5 Gew.-% und 1 Gew.-% übliche Mindestmengen darstellen. In vielen Fällen haben sich auch Mindestmengen von 2 bzw. 5 Gew.-% als zweckmäßig erwiesen. Für die Endhydrolyse in der Beschichtungslösung sind vorzugsweise Mindestmengen von 0,1 bzw. 0,2 Gew.-% H₂O üblich. In vielen Fällen sind auch Mindestmengen von 1 bzw. 2 Gew.-% H₂O üblich.

Die Mischung des vorkondensierten Fluoralkylsilanes und des tetrafunktionellen Silanes wird in einem nahezu gleichen Reaktionsstadium durchgeführt. Es hat sich gezeigt, dass bei dieser Vorgehensweise das Fluoralkylsilan an das tetrafunktionale Silan während der Sol-Gelbildung besonders gut gebunden wird. Auf diese Weise wird nicht nur die Reaktion deutlich beschleunigt. Es hat sich auch gezeigt, dass sich bei dieser Vorgehensweise das Fluoralkylsilan besonders gut im Tetraalkylsilan löst, wodurch die homogene Verteilung verbessert wird.

Besonders bevorzugt ist eine Vorkondensation von höchstens 50 Stunden, insbesonders von höchstens 45 Stunden. Bevorzugte Mindestreifezeiten sind 6 Stunden, insbesonders 12 Stunden, wobei mindestens 18 Stunden bevorzugt sind. Übliche Mindestzeiten für die Vorkondensation betragen mindestens 24 Stunden. In einzelnen Fällen können diese jedoch auch beachtlich unterschritten werden.

Die Mischung aus Gel und hydrophober Substanz wird mittels üblichen Beschichtungsverfahren aufgetragen, wie Tauchen, Walzen, Schleudern, Einpolieren, Rollen oder Sprühen, wobei das Sprühen, Schleudern und das Tauchbeschichten bevorzugt sind. Dabei lässt sich durch Steuerung der Viskosität und der Ziehgeschwindigkeit, mit welcher der zu beschichtende Gegenstand aus der Tauchlösung gezogen wird, die Dicke der Beschichtung steuern. Erfindungsgemäß bevorzugt herstellbare Schichtdicken betragen zwischen 0,5 nm - 1 µm, wobei Schichtdicken von mindestens 5 nm, insbesonders mindestens 10 nm bzw. 20 nm und höchstens < 200 nm, insbesonders höchstens 100 bzw. 80 nm insbesonders bei Tauchschichten bevorzugt sind. Bei Sprühschichten werden dickere Schichten bevorzugt. Hier sind Schichtdicken von > 40 nm, insbesonders > 50 bzw. 60 nm, bevorzugt. Nach dem Auftragen wird die Schicht vorzugsweise bei Raumtemperatur für mindestens 1 Minute, vorzugsweise mindestens 3 Minuten, getrocknet und anschließend bei erhöhter Temperatur gehärtet. Die Trockenzeit hängt von der erzeugten Schichtdicke, der tatsächlichen. Temperatur sowie vom Dampfdruck des Lösungsmittels ab und beträgt vorzugsweise mindestens 1 Minute und insbesondere mindestens 3 Minuten. Übliche Trockenzeiten betragen 4-6 Minuten. Das Sintern bzw. Härten der aufgetragenen Schicht erfolgt vorzugsweise bei Temperaturen von 150°C - 400°C, vorzugsweise bei 250°C -380°C. Die Dauer der Härtung beträgt üblicherweise maximal 1 Stunde, wobei maximal 45 Minuten und insbesondere maximal 30 Minuten bevorzugt sind. Die Schicht selbst ist bis mindestens 300°C, vorzugsweise bis mindestens 400°C, stabil.

Mittels dem Hydrolysegrad ist es möglich die Viskosität der Beschichtungslösung, insbesondere der Tauchlösung, genau auf einen ziehfähigen Wert einzustellen. Auf diese Weise kann bei bekannter Viskosität und bei bekannter Ziehgeschwindigkeit die jeweils erzeugte Schichtdicke genau reproduzierbar hergestellt werden. Eine Veränderung der Viskosität beim Gebrauch der Beschichtungs- bzw. Tauchlösung lässt sich auf einfache Weise mittels Verdünnen mit Lösungsmitteln, z.B. Ethanol oder dem Zudosieren weiterer hydrolysefähiger Sol-Gellösung auf den jeweils gewünschten Wert anpassen.

Zur Herstellung der erfindungsgemäß beschichteten Vorrichtung bzw. des erfindungsgemäß beschichteten Erzeugnisses ist es auch möglich den Brechungsindex des Überzuges an das Trägermaterial anzupassen. Dies ist beispielsweise durch Mischen verschiedener Metalloxide.möglich. SiO₂ hat einen Brechungsindex von n = 1,45, TiO₂ von n = 2,3. In einem System SiO₂/TiO₂ sind je nach Zusammensetzung beliebige Brechwerte innerhalb dieser Extremwerte einstellbar. Durch Einstellen des Brechungsindex und der Schichtdicke ist das erfindungsgemäße Verfahren auch besonders zur Herstellung von Interferenzbeschichtungen, wie z.B. zum Entspiegeln, geeignet.

In einer besonderen erfindungsgemäßen Ausgestaltung wird die dauerhaft hydrophobe Schicht mittels geeigneten Maßnahmen vor, während oder nach der thermischen Aushärtung mit einer Oberflächenmikrostruktur versehen, wodurch die hydrophoben Eigenschaften der Beschichtung verstärkt und ihre Reinigung erleichtert werden bzw. die Schicht eine entspiegelnde Wirkung erhält bzw. verstärkt wird. Derartige Maßnahmen lassen sich mittels Einlagerung von Partikeln oder Prägen erzeugen. Auf diese Weise lassen sich Oberflächenmikrostrukturen erreichen, welche beispielsweise Noppen aufweisen, die einen Kontakt von verschmutzenden Teilen mit der erfindungsgemäß beschichteten Oberfläche auf wenige Berührungspunkte beschränken, wie diese beispielsweise beim sogenannten Lotuseffekt der Fall ist. Auf diese Weise wird der gewünschte Reinigungseffekt weiter erhöht.

In einer weiteren erfindungsgemäßen Ausgestaltung wird die Vorrichtung, insbesondere das die Oberflächenschicht tragende Substrat der Vorrichtung, zumindest an den die Schicht tragenden Stellen vor der Beschichtung aktiviert. Derartige Aktivierungsverfahren sind vielfältig und dem Fachmann bekannt und umfassen Oxidation sowie Plasmabehandlung oder auch die Behandlung mittels Säure und/oder Lauge. Ebenso ist es möglich vor Beschichtung des erfindungsgemäßen Gegenstandes an diesen Stellen eine oder mehrere Haftvermittlerschichten aufzutragen. Derartige Haftvermittlerschichten sind vielfältig und dem Fachmann bekannt sowie leicht für das jeweilige Substratmaterial zu ermitteln. Ein üblicher Haftvermittler sind Silanole, die reaktive Gruppen aufweisen. So ist z.B. für Kunststoff ein Acrylsilan, wie beispielsweise Methacryloxid-Alkyltrimethoxisilan geeignet. Bei Metallen hat sich beispielsweise die Behandlung mit Chromoxid als Haftvermittler als geeignet erwiesen. In einzelnen Fällen ist es zweckmäßig die Substratoberfläche zuvor aufzurauhen, beispielsweise durch Anätzen.

In einer weiteren bevorzugten Ausführungsform weist die Oberflächenschicht nanoskalige Partikel, insbesondere solche von großer Härte auf. Derartige Partikel weisen eine durchschnittliche Teilchengröße von < 800, vorzugsweise < 500 und insbesondere < 200 nm auf, wobei Teilchen von < 100 nm besonders bevorzugt sind. In vielen Fällen haben sich sogar Größen von < 50 und < 10 nm als besonders geeignet erwiesen. In einer weiteren bevorzugten Ausführungsform sind derartige Partikel an ihrer Oberfläche mit einer hydrophoben Substanz versehen, wie sie beispielsweise zuvor beschrieben sind. Durch Einfärben dieser Partikel oder durch Beimischen von Farbpigmenten ist es auch möglich die Schicht anzufärben bzw. diese optisch wahrnehmbar auszugestalten.

Prinzipiell können die erfindungsgemäßen Vorrichtungen bzw. Gegenstände als Substrat oder Basis für die Beschichtung aller beliebigen Materialien eingesetzt werden, welche die zuvor beschriebene Sintertemperatur überstehen. Hierzu gehören insbesondere Metalle, Kunststoffe, anorganische Mineralien und Steine, wie z.B. Marmor, Granite, gebrannte Tone sowie Glas, Glaskeramik, ggf. auch Holz.

Die erfindungsgemäßen Vorrichtungen sind sowohl für Heißals auch für Kaltanwendungen geeignet, und zwar sowohl im häuslichen als auch im kommerziellen Bereich, wie beispielsweise Büros, Küchen, Bäckereien, Wäschereien etc. Für Kaltanwendungen sind dies insbesondere Geräte, welche direkt oder indirekt zur Lebensmittelzubereitung verwendet werden, sowie die Außenflächen von Gerätschaften oder Schränken, die starken Verschmutzungen durch kontaminierte Luft ausgesetzt sind. Hierzu gehören auch sogenannte interaktive Oberflächen zur Bedienung von Geräten und Hausinstallationstechnik oder die Bedieneroberflächen für verschiedenste Geräte. Hierzu gehören sowohl Vorrichtungen und Gerätschaften der sogenannten weißen Ware, wie Kühlschränke, Tiefkühl und Gefriertruhen, Kühlkombinationen, Wasch- und Spülmaschinen, Wäschetrockner, Gas- und E-Herde, Mikrowellenherde oder auch Ölradiatoren ebenso wie sogenannte braune Ware und Elektronikgeräte mit Bildröhren, wie Fernsehgeräte und Computermonitore.

Die Erfindung betrifft daher insbesondere auch pflegeleichte Kücheneinrichtungen sowie mindestens eine oder eine Kombination mehrerer Teile hiervon, wie haushaltsübliche Gerätschaften, insbesondere Backöfen, Kochfelder, Mikrowellengeräte, Grillgeräte, Dunstabzugshauben sowie die hierzu gehörenden Bedienungseinheiten. Prinzipiell sind sämtliche Vorrichtungen umfasst, welche Lebensmittel in einer beliebigen Art und Weise erwärmen oder entsprechend verarbeiten oder mit solchen Vorrichtungen in unmittelbarem Zusammenhang stehen. Bei derartigen Vorrichtungen sind mindestens eine, häufig alle Flächen, d.h. sowohl die außen- als auch die innenliegenden Oberflächen, einem erhöhten Verschmutzungsrisiko ausgesetzt. Hierzu gehören auch Küchenhilfsgeräte, wie Mixer oder Püriermaschinen ebenso wie Schneidebretter und Schneidegeräte, wie Klingen und Scheiben.

Eine derartige Kücheneinrichtung bzw. Gerätschaften sind beim täglichen Gebrauch einem erhöhten Risiko ausgesetzt, durch die Zubereitung von Speisen aller Art verschmutzt zu werden. Dabei ergeben sich unterschiedlichste Verschmutzungskombinationen. Die gesamte Palette einsetzbarer Lebensmittel kann mit unterschiedlichsten Eigentemperaturen mit Flächen der Kücheneinrichtung, die ebenfalls unterschiedlichste Temperaturen haben können, in Kontakt kommen. Die Erfindung beschreibt eine reinigungsfreundliche Kücheneinrichtung deren Flächen unabhängig vom Zustandekommen der Verschmutzung ein leichtes Abreinigen unter zu Hilfenahme haushaltsüblicher Reinigungshilfsmittel und unter Umständen geringen Mengen leichter Haushaltsreiniger derselben erlauben. Bisher sind keine Kücheneinrichtungen auf dem Markt, die vollständig leicht reinigbar sind.

Die erfindungsgemäßen Beschichtungen sind besonders beständig gegen Abrieb und gegen Hitzebelastung. Sie halten lang andauernde hohe Temperaturen von über 310°C ohne Weiteres aus ohne ihre Eigenschaften zu verlieren. Die Beschichtung hält in einem Ofen bei verschiedenen Temperaturen lange Zeit unbeschadet aus. Beschichtete Gegenstände, wie beispielsweise Backofentüren (z.B. die Innenscheibe eines Backofens), halten eine Temperatur von 280°C für 10.000 Stunden sowie von 290°C für 1.000 Stunden und 300°C für 100 Stunden bzw. 310°C für 30 Stunden ohne Schädigung aus.

Die erfindungsgemäßen Vorrichtungen können jedoch auch interferenzoptische Schichtpakete, wie beispielsweise Entspiegelungen, enthalten. Derartige Entspiegelungsbeschichtungen werden bevorzugt als die äußerste an die Umgebung bzw. Luft angrenzende Schicht angerechnet.

Die Erfindung soll durch die folgenden Beispiele näher erläutert werden.

### Beispiel 1 - Herstellung von hydrophob modifizierten SiO₂-Tauchlösungen

a) Es wird eine Mischung aus 13,6 g Tetramethylorthosilikat (CAS:681-84-5 erhältlich unter dem Namen Dynasil TM M von Degussa Frankfurt/Deutschland) und 13,6 g 96%-igem Ethanol hergestellt (Mischung A), sowie eine Mischung aus 3,75 g destilliertem Wasser und 0,15 g 36%-iger HCl (Mischung B). Mischung A und B werden zusammengegeben und 10 Minuten lang bei Raumtemperatur gerührt. Danach wird eine Mischung aus 1,4 g eines wasserlöslichen modifizierten Fluoralkylsiloxans (vorzugsweise vorhydrolysiert) (CAS 54-17-5 erhältlich unter der Bezeichnung Dynasylan TM F8800 von Degussa Frankfurt/Deutschland) und 175 g 96%-iges Ethanol unter Rühren zugegeben. Diese Mischung wird als Tauchlösung eingesetzt.
b) Analog zu a) wird eine Mischung A bestehend aus 13,6 g Ethylpolysilikat (aus Tetraethylsilikat erhältlich unter der Bezeichnung Dynasyl™ 40 von Degussa AG Frankfurt/ Deutschland) und 13,6 g 96%-iges Ethanol und eine Mischung B aus 3,8 g Wasser und 0,15 g 36%-iger Salzsäure hergestellt, dann beide Mischungen zusammengegeben und 10 Minuten lang gerührt. Danach wird eine Mischung aus 1,4 g eines wasserlöslichen modifizierten Fluoralkylsiloxans das Aminoalkyl-funktionelle Substituenten enthält (vorzugsweise vorhydrolysiert) (CAS Nr. 64-17-5, erhältlich von der Degussa AG Frankfurt am Main/ Deutschland unter der Bezeichnung Dynasylan TM F8800) und 175 g 99,5%-iges Ethanol, unter Rühren zugegeben.
c) Es wird eine Mischung aus 254,2 g 99,5%-igem Ethanol, 77,6 g Wasser, 7,2 g Eisessig und 90,8 g Tetramethylorthosilikat (Dynaysil TM M s.o.) zusammengerührt und 24 Stunden stehengelassen. Danach werden 25 g des so erhaltenen Konzentrates mit 75 g 99,5%-igem Ethanol unter Rühren vermischt und danach eine Mischung aus 100 g 99,5%-igem Ethanol und 1,4 g eines Fluoralkyl-funktionellem wasserlöslichem Polysiloxans, das mittels einer Aminoalkyl-funktionellen Substitution wasserlöslich gemacht ist (vorzugsweise vorhydrolysiert) (CAS Nr. 64-17-5, Dynasylan TM F8800), zusammengerührt, wodurch die fertige Tauchlösung entsteht.
d) In 240 ml Ethanol werden 88,6 ml Kieselsäuremethylester, 80 ml destilliertes Wasser und 10 ml Eisessig eingerührt . Die so erhaltene Lösung lässt man 42 Stunden stehen. Dann wird mit 1.580 ml Ethanol verdünnt und die Hydrolyse mit 2 ml einer 37%igen Salzsäure gestoppt. Danach werden 9,3 ml Tridecafluoroctyltriethoxysilan (vorzugsweise vorhydrolysiert) (erhältlich unter der Bezeichnung Dynasylan F8261 von DEGUSSA-HÜLS, Frankfurt, Deutschland) unter Rühren zugegeben.

Die Beschichtung wurde erfindungsgemäß mittels eines einzigen. Tauchvorgangs aufgetragen. Im Anschluss wurde fünf Minuten lang bei Raumtemperatur getrocknet und bei 250°C für maximal 30 Minuten eingebrannt, wodurch das Kieselgel härtete.

### Beispiel 2 - Herstellung und Prüfung einer erfindungsgemäßen Beschichtung

Eine gereinigte, 10 x 20 cm große und 2 mm dicke Platte aus Borosilikat-Glas wurde bei Raumtemperatur in die zuvor in Beispiel 1 beschriebene SiO₂-Tauchlösung eingetaucht und mit einer Geschwindigkeit von 20 cm/min aus der Lösung herausgezogen. Anschließend wurde die aufgezogene Schicht 5 Minuten lang bei Raumtemperatur getrocknet und dann 20 Minuten lang bei 250°C (Tabelle 1, Schicht 1) oder bei 300°C (Tabelle 1, Schicht 2) in einem Ofen gebrannt. Nach dem Einbrennen hatte die erfindungsgemäße Schicht eine Dicke von etwa 120 nm. Die Beurteilung der Hydrophobisierung erfolgte durch Bestimmung des Kontaktwinkels mit Wasser. Sie wurde mit einem Kontaktwinkelmessgerät "G10" der Firma KRÜSS, Hamburg durchgeführt. Dabei zeigen zum Beispiel frisch gereinigte Glasoberflächen einen Kontaktwinkel ≤ 20 Grad, gelagerte Glasoberflächen etwa 60 Grad und frisch hydrophobisierte Oberflächen ≤ 100 Grad.

Direkt nach der erfindungsgemäßen Herstellung wurde auf diese Weise bei Raumtemperatur ein Wert von 110 Grad gemessen. Danach wurde ein Schrubb-Test wie folgt durchgeführt: eine mit Wasser befeuchtete Filzklappe mit einer Auflagefläche von etwa 3 cm wurde mit einer Gesamtauflagemasse von m = 1 kg belastet und auf der Probe hin und her bewegt. Dabei entspricht ein Belastungszyklus einer Hin- und Herbewegung.

Nach 500 Belastungszyklen mittels diesem Schrubb-Test betrug der Kontaktwinkel noch 102 Grad, nach 1000 Belastungszyklen 103 Grad und nach 2000 Belastungszyklen noch 100 Grad bei einer Messgenauigkeit von ± 3 Grad.

### Beispiel 3 (Vergleichsbeispiel) - Hydrophobierung durch Anwendung eines Fluoralkylsilans

Durch Auftrag von Tridecafluoroctyltriethoxysilan ("F8262" von DEGUSSA-HÜLS) wurde eine hydrophobe Glasoberfläche nach dem Stand der Technik hergestellt: Vollflächiger Auftrag des Fluoralkylsilans mit einem Textiltuch und Fixierung 20 Minuten bei 200°C bzw. 250°C. Die Messung des Kontaktwinkels von Wasser ergab direkt nach der Herstellung einen Wert von 108 Grad. Nach 500 Belastungszyklen des Schrubb-Tests (s.o.) betrug der Kontaktwinkel 81 Grad, nach 1000 Belastungszyklen 68 Grad und nach 2000 Belastungszyklen noch 67 Grad. Ähnliche Werte wurden auch an identisch geprüften hydrophobierten Glasoberflächen verschiedener Hersteller gemessen.

### Beispiel 4 (Vergleichsbeispiel) - Hydrophobierung durch Anwendung eines Silikonöls

Durch Auftrag von Hydromethylpolysiloxan ("Fluid 1107" von DOW CORNING) wurde eine hydrophobe Glasoberfläche nach dem Stand der Technik hergestellt: Vollflächiger Auftrag des Silikonöls mit einem Textiltuch und Fixierung 20 Minuten bei 180°C. Die Messung des Kontaktwinkels von Wasser ergab direkt nach der Herstellung einen Wert von 102 Grad. Nach 500 Belastungszyklen des Schrubb-Tests (s.o.) betrug der Kontaktwinkel 87 Grad, nach 1000 Belastungszyklen 71 Grad und nach 2000 Belastungszyklen noch 51 Grad. Ähnliche Werte wurden auch an identisch geprüften hydrophobierten GlasOberflächen verschiedener Hersteller gemessen.

### Beispiel 5 (Vergleichsbeispiel) - Verhalten kommerziell erhältlicher hydrophober Glasoberflächen

Es wurden 4 verschiedene im Handel erhältliche hydrophobisierte Gläser verschiedener Hersteller wie in Beispiel 2 beschrieben einem Belastungs- bzw. Schrubb-Test unterworfen. Die Ergebnisse sind in Tabelle 1 zusammengefasst.

**Tabelle 1: Kontaktwinkel von Wasser in Grad nach n Belastungszyklen für verschiedene hydrophobierte Glasoberflächen**

| | | | | |
|---|---|---|---|---|
| Herstellung/Herkunft | n = 0 | n = 500 | n = 1000 | n = 2000 |
| erfindungsgemäße Schicht 1, Beispiel 2 (250°C) | 114 | 106 | 102 | 101 |
| erfindungsgemäße Schicht 2, Beispiel 2 (300°C) | 110 | 102 | 103 | 100 |
| Beispiel 3 {Vergleichsbeispiel gemäß Stand der Technik mit Fluoralkylsilan beschichtet) | 108 | 81 | 68 | 67 |
| Beispiel 4 (Vergleichsbeispiel gemäß Stand der Technik mit Silikonöl beschichtet) | 102 | 87 | 71 | 51 |
| kommerziell erhältliche hydrophobierte Glasoberflächen gemäß Beispiel 5 | 90-99 | 54-89 | 50-71 | |

### Beispiel 6 - Auftrag mittels einer Sprühbeschichtung

In einer 100 ml-Duranflasche wurden 13,2 g Tetramethylsilan TM M vorgelegt und dann unter Rühren 13,2 g 99,5-%iges Ethanol zugegeben. Anschließend wurden 1,4 g Fluoralkylsilan (F8261 Degussa) zugegeben und kurz gerührt. Anschließend wurden 6,2 g H₂O mit 0,05 g HCl versetzt und die so erhaltene Mischung langsam unter Rühren in die Duranflasche eingerührt und anschließend 10 Minuten lang weiter gerührt. Dieses Konzentrat wurde 24 Stunden stehen gelassen. Danach wurde in einer 200 ml-Duranflasche 160 g Aceton vorgelegt und innerhalb 5 Minuten 8 g des Ausgangskonzentrats dazugegeben.

Es wurden 8 g des Ausgangskonzentrats unter Rührung in eine 2000 ml-Duranflasche gegeben, in welcher bereits 160 g Aceton vorgelegt sind. Anschließend wird 5 Minuten lang gerührt. Diese Lösung wird zum Auftragen mittels einer Sprühbeschichtung verwendet.

Die Sprühbeschichtung erfolgt mit einer Krautzberger Micro 0,8 mm Rundstrahldüse. Die Sprühdüse beschreibt einen meanderförmigen Weg bei der Substratbelegung. Das Substrat wurde mit folgenden Parametern beschichtet. Verfahrensgeschwindigkeit: 225 mm/s; Versatzsprühbahn 20 mm Düsenabstand: 220 mm; Sprühdruck: 2 bar; Sprühmenge: 46,8 ml/Minute.
Derartige hydrophobe Schichten mit der oben beschriebenen Lösung und Verfahren bestehen eine Temperaturlagerung von 300°C für 100 Stunden. Auch unter diesen strengen Bedingungen bleibt der Kontaktwinkel nahezu unverändert (101°/97°).

### Beispiel 7 - Einbrenn- und Anbacktest

Erfindungsgemäß erhaltene beschichtete Glasplatten werden mit handelsüblichen Lebensmitteln bestrichen. Dabei wurde das Anbackverhalten von Magerquark und Ketchup und die Entfernbarkeit dieser angebrannten Speisen bestimmt. Nach dem Auftragen wurde auf eine erhöhte Temperatur, wie sie in Hausbacköfen herrscht (200-250°C), von ca. 220°C erhitzt und die Speisen eingebrannt. Anschließend wurde der so angebackene Rest mittels eines Tuches entfernt. Die Entfernbarkeit wurde dann mittels einer subjektiven Bewertungsskala bewertet. Es zeigt sich, dass die erfindungsgemäß beschichteten Oberflächen sehr leicht bis leicht reinigbar sind und keine Rückstände auf der Scheibe nach dem Einbrennen belassen.

## Patentansprüche

1. Vorrichtung mit leicht reinigbarer, bis mindestens 300° C hitzebeständiger Oberflächenschicht, die ausgeprägte Antihaft-Eigenschaften und eine Dicke zwischen 1 und 1000 nm aufweist und die ausgeprägt hydrophob ist und mit Wasser einen Kontaktwinkel > 90° aufweist, **dadurch gekennzeichnet, dass** die Schicht:
- ein Netzwerk aus einem Metalloxid enthält, in dem über die Schichtdicke hinweg eine hydrophobe Substanz gleichmäßig verteilt vorliegt und wobei im gesamten Volumen des Netzwerks die hydrophobe Substanz gleichmäßig verteilt enthalten ist.

2. Vorrichtung nach Anspruch 1 **dadurch gekennzeichnet, dass** die Schicht auf einem Trägersubstrat vorliegt aus der Gruppe umfassend Glas, Glaskeramik, Metall, Keramik und Kunststoff oder Verbundstoffe.

3. Vorrichtung nach einem der vorhergehenden Ansprüche erhältlich durch direktes Aufbringen der Beschichtung, nach vorangehender Aktivierung der zu beschichtenden Fläche, und/oder nach Aufbringen mindestens einer oder mehrerer geeigneter Haftvermittlerschichten.

4. Vorrichtung nach einem der vorhergehenden Ansprüche, **dadurch gekennzeichnet, dass** die hydrophobe Substanz mindestens ein Fluoralkylsilan umfasst.

5. Vorrichtung nach einem der vorhergehenden Ansprüche, **dadurch gekennzeichnet, dass** die Beschichtung nanoskalige Partikel enthält.

6. Vorrichtung nach einem der vorhergehenden Ansprüche, **dadurch gekennzeichnet, dass** die Beschichtung bis 400°C temperaturbeständig ist.

7. Vorrichtung nach einem der vorhergehenden Ansprüche, **dadurch gekennzeichnet, dass** die Schichtdicke 10-250 nm aufweist.

8. Vorrichtung nach einem der vorhergehenden Ansprüche, **dadurch gekennzeichnet, dass** die Schicht eine zusätzliche Schutzschicht ausgewählt aus Email, dekorativer und/oder funktioneller Bedruckung mit keramischen oder organischen Dekorfarben aufweist.

9. Vorrichtung nach einem der vorhergehenden Ansprüche, **dadurch gekennzeichnet, dass** sie eine Kücheneinrichtung sowie Elemente davon umfasst.

10. Vorrichtung nach einem der vorhergehenden Ansprüche, **dadurch gekennzeichnet, dass** sie mindestens eins der folgenden Gerätschaften umfasst, die ausgewählt sind aus Backöfen, Kochfeldern, Mikrowellengeräten, Grillgeräten, Dunstabzugshauben sowie den dazugehörigen Bedienungseinheiten, Mixer, Pürierstäben, Lebensmittelgefäßen, Backblechen und/oder Backformen.

## Claims

1. Apparatus with an easily cleanable surface layer, heat resistant to at least 300 °C, which exhibits markedly anti-adhesive properties and a thickness of between 1 and 1000 nm and which is markedly hydrophobic, and exhibits a water contact angle > 90°, **characterised in that** the layer:
- contains a network of a metal oxide, in which a hydrophobic substance is present, uniformly distributed, and wherein the hydrophobic substance is contained uniformly distributed in the entire volume of the network.

2. Apparatus according to claim 1, **characterised in that** the layer is present on a carrier substrate from the group comprising glass, glass ceramic, metal, ceramics, and plastic or composites.

3. Apparatus according to any one of the preceding claims, obtainable by direct application of the coating, after previous activation of the surface which is to be coated, and/or after the application of at least one or more suitable adherence promoting layers.

4. Apparatus according to any one of the preceding claims, **characterised in that** the hydrophobic substance comprises at least one fluoroalkyl silane.

5. Apparatus according to any one of the preceding claims, **characterised in that** the coating contains nanoscale particles.

6. Apparatus according to any one of the preceding claims, **characterised in that** the coating is temperature-resistant up to 400°C.

7. Apparatus according to any one of the preceding claims, **characterised in that** the layer thickness is 10-250 nm.

8. Apparatus according to any one of the preceding claims, **characterised in that** the layer comprises an additional layer, selected from enamel, decorative and/or functional printing with ceramic or organic decor colours.

9. Apparatus according to any one of the preceding claims, **characterised in that** it comprises a cooking device and elements thereof.

10. Apparatus according to any one of the preceding claims, **characterised in that** it comprises at least one of the following appliance arrangements, selected from ovens, cooking surfaces, microwave devices, grill devices, fume extractor hoods, and the operating units pertaining to them, mixers, immersion blenders, food containers, baking trays and/or baking moulds.

## Revendications

1. Dispositif comprenant une couche superficielle facilement nettoyable, résistant à des températures jusqu'à au moins 300 °C, laquelle couche superficielle présente des propriétés fortement anti-adhésives et une épaisseur comprise entre 1 et 1000 nm et qui est fortement hydrophobe et présente, avec l'eau, un angle de contact > 90°, **caractérisé en ce que** la couche :
- contient un réseau constitué d'un oxyde métallique, dans lequel une substance hydrophobe présente est répartie de manière homogène sur l'épaisseur de couche, sachant que la substance hydrophobe est contenue avec une répartition homogène dans le volume total du réseau.

2. Dispositif selon la revendication 1, **caractérisé en ce que** la couche se trouve sur un substrat de support issu du groupe comprenant un verre, une vitrocéramique, un métal, une céramique et une matière plastique ou des substances composites.

3. Dispositif selon l'une quelconque des revendications précédentes obtenu par application directe du revêtement, à l'issue d'une activation antérieure de la surface à recouvrir, et/ou à l'issue de l'application au moins d'une ou de plusieurs couches de promoteur d'adhérence appropriées.

4. Dispositif selon l'une quelconque des revendications précédentes, **caractérisé en ce que** la substance hydrophobe comprend au moins un fluoroalkylsilane.

5. Dispositif selon l'une quelconque des revendications précédentes, **caractérisé en ce que** le revêtement contient des particules relevant de l'échelle nanométrique.

6. Dispositif selon l'une quelconque des revendications précédentes, **caractérisé en ce que** le revêtement résiste à des températures allant jusqu'à 400 °C.

7. Dispositif selon l'une quelconque des revendications précédentes, **caractérisé en ce que** l'épaisseur de couche présente une valeur de 10 - 250 nm.

8. Dispositif selon l'une quelconque des revendications précédentes, **caractérisé en ce que** la couche présente une couche de protection supplémentaire choisie parmi l'émail, une impression décorative et/ou fonctionnelle dotée de couleurs décoratives céramiques ou organiques.

9. Dispositif selon l'une quelconque des revendications précédentes, **caractérisé en ce qu'**il comprend un équipement de cuisine ainsi que des éléments.

10. Dispositif selon l'une quelconque des revendications précédentes, **caractérisé en ce qu'**il comprend au moins un des équipements ménagers qui suit, lesquels sont choisis parmi les fours de cuisson, les plaques de cuisson, les micro-ondes, les appareils pour grillades, les hottes aspirantes ainsi que parmi les ustensiles associés, les mixeurs, les pieds mixeurs, les contenants pour denrées alimentaires, les plaques de cuisson et/ou les moules de cuisson.
